# FASCICULE DE BREVET EUROPEEN

(11) **EP 1 792 358 B1**
(45) Date de publication et mention de la délivrance du brevet: **10.12.2008**
(21) Numéro de dépôt: 05778192.4
(22) Date de dépôt: 17.06.2005
(51) Int. Cl.: H01M 8/02

(54) **JOINT D'ETANCHEITE ET PLAQUE DE CELLULES DE PILE A COMBUSTIBLE, CELLULES RESULTANTES ET PILE A COMBUSTIBLE COMPRENANT UN EMPILEMENT DE TELLES CELLULES**
DICHTVERBINDUNG UND BRENNSTOFFZELLENPLATTE, ERHALTENE ZELLEN UND RESULTIERENDE BRENNSTOFFZELLEN MIT EINEM STAPEL SOLCHER ZELLEN
SEALING JOINT AND FUEL CELL PLATE, CELLS OBTAINED AND RESULTING FUEL CELLS COMPRISING A STACK OF SUCH CELLS

(30) Priorité: 09.09.2004 FR 0452002
(43) Date de publication de la demande: 06.06.2007
(73) Titulaire: L'AIR LIQUIDE, Société Anonyme pour l'Etude et l'Exploitation des Procédés Georges Claude, 75007 Paris (FR)
(72) Inventeur: NOVET, Thierry, F-38190 BERNIN (FR); CHARLAT, Pierre, F-38250 LANS EN VERCORS (FR); ROBERGE, Guillaume, F-38300 BOURGOIN (FR)
(74) Mandataire: De Cuenca, Emmanuel Jaime
(86) Numéro de dépôt international: PCT/FR2005/050455
(87) Numéro de publication internationale: WO 2006/030136

(56) Documents cités:
- WO-A-00/68463
- US-A- 4 978 590
- PATENT ABSTRACTS OF JAPAN vol. 1997, no. 06, 30 juin 1997 (1997-06-30) & JP 09 055217 A (TANAKA KIKINZOKU KOGYO KK), 25 février 1997 (1997-02-25)

## Description

La présente invention concerne les piles à combustible du type à assemblage de cellules élémentaires et en particulier des architectures de joints d'étanchéité entre plaque polaire et plaque polaire correspondantes.

Les cellules d'une pile à combustible sont constituées d'un assemblage de plaques conductrices, mono ou bipolaires, enserrant une structure membranaire, et de joints d'étanchéité interposés périphériquement entre de telles plaques, l'étanchéité étant réalisée lors du pressage des joints entre les plaques.

Au cours du montage de chaque cellule, et au cours des opérations de maintenance ultérieures, il est nécessaire de positionner correctement chaque cellule dans le paquet de cellules en évitant tout désalignement entre cellules et plissement au pincement des joints intercalés.

Le document JP 09 055 217 décrit un joint d'étanchéité de plaque polaire de cellule de pile à combusitible, comprenant une partie principale en forme de cadre rectangulaire et, en au moins deux coins diagonalement opposés, une partie en saillie formant au moins une première boucle.

La présente invention a pour objet de proposer une architecture de joints d'étanchéité et de plaques polaires permettant l'accrochage aisé du joint sur les plaques en assurant un positionnement fiable du joint.

La présente invention a pour autre objet de proposer une telle architecture de joints et de plaques permettant de maintenir la cellule en position fermée avant montage dans la pile grâce à la conformation des joints et des plaques.

Pour ce faire, selon une caractéristique de l'invention, un joint d'étanchéité comprend une partie principale en forme de cadre polygonal, typiquement rectangulaire et, en au moins deux coins diagonalement opposés du cadre, une partie en saillie formant au moins une première boucle pour l'accrochage sur le bord d'une plaque.

Selon une autre caractéristique de l'invention, la partie en saillie du joint comporte une deuxième boucle pour accrochage sur le bord de l'autre plaque de la paire de plaques constituant une cellule.

Selon un aspect de l'invention, une plaque polaire de cellule comporte, sur au moins une face, un réseau de canaux de circulation du fluide et, à leur périphérie, une gorge de configuration générale rectangulaire destinée à recevoir un joint d'étanchéité, et, à au moins deux coins diagonalement opposés, au moins un ergot d'accrochage d'une boucle de joint.

Selon des caractéristiques particulières de l'invention :
- la gorge a un profil transversal trapézoïdal ; et
- le joint présente, sur une de ses faces principales, une rainure longitudinale.

La présente invention a également pour objet une cellule de pile à combustible constituée d'une paire de plaques accolées, chacune pourvue d'un joint d'étanchéité tels que précédemment définis.

L'invention a également pour objet une telle cellule assemblée par accrochage aux plaques des joints d'étanchéité.

La présente invention a enfin pour objet une pile à combustible comprenant un empilement de telles cellules.

D'autres caractéristiques et avantages de l'invention ressortirons de la description suivante de modes de réalisation, donnés à titre illustratif mais nullement limitatif, faite en relation avec les dessins annexés, sur lesquels :
- la Figure 1 est une vue en plan d'une plaque polaire et d'un joint d'étanchéité selon l'invention avant accrochage ;
- la Figure 2 est une vue en plan du joint de la Figure 1 ;
- la Figure 3 est une vue en perspective d'une cellule assemblée selon l'invention ;
- la Figure 4 est une vue agrandie de la portion d'angle indiquée 4 sur la Figure 3 ;
- la Figure 5 est une vue partielle d'un petit côté de l'ensemble de la Figure 3 montrant la mise en place de composants de mesure associés à la cellule ; et
- la Figure 6 est une vue en coupe d'une zone de joint d'une cellule selon l'invention.

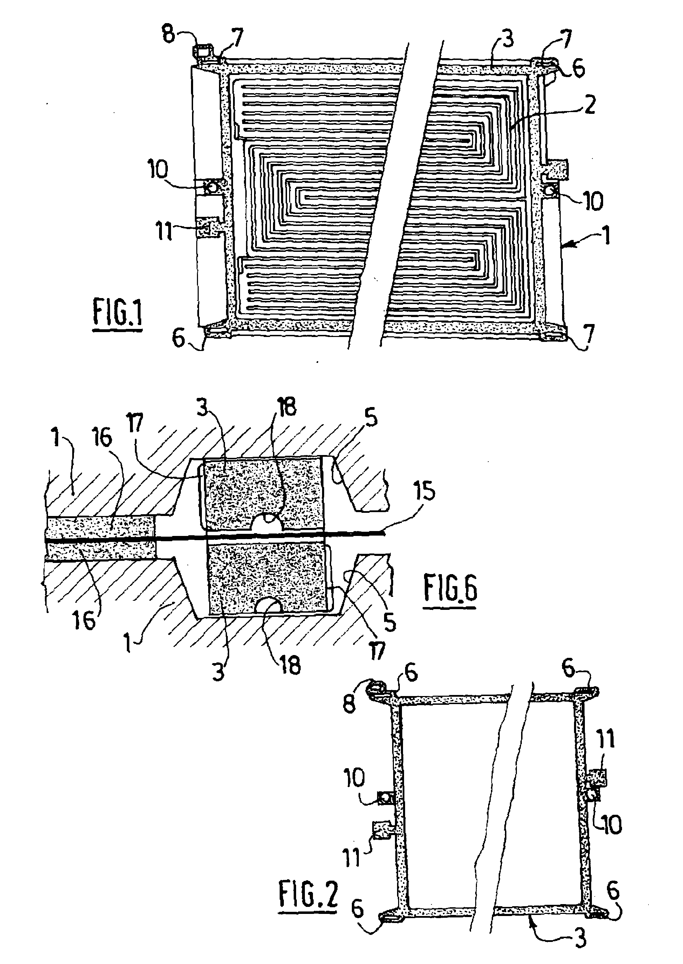

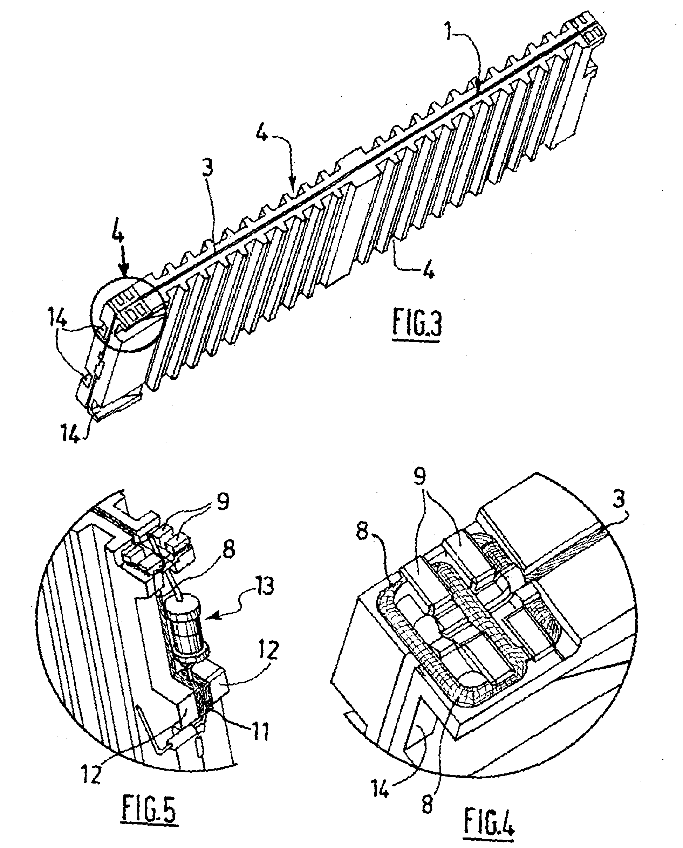

Dans le mode de réalisation représenté sur la Figure 1, on reconnaît une plaque polaire 1, de configuration générale plate et rectangulaire comportant, sur une face, un réseau de canaux de distribution de fluides 2, une gorge périphérique de réception d'un joint d'étanchéité élastique 3, comme on le verra plus loin, et, sur son autre face, des canaux parallèles de circulation de fluides 4 (cf. Figure 3).

Comme on le voit sur la Figure 2, le joint 3 présente une configuration générale d'un cadre rectangulaire, de section rectangulaire, destiné à être reçu dans une gorge rectangulaire correspondante 5 de la plaque (cf. Figure 6), avec, en au moins deux coins diagonalement opposés, avantageusement aux quatre coins, une partie en saillie formant une boucle 6 venant s'accrocher élastiquement, en configuration d'assemblage, sur un ergot correspondant 7 en saillie intérieurement de la plaque 1. Le joint 3 peut ainsi être correctement placé, légèrement sous tension, dans la gorge 5 de la plaque 1.

Selon un aspect de l'invention le joint 3 comporte en au moins un de ses coins une autre boucle 8 s'étendant en porte à faux vers l'extérieur à partir de la première boucle adjacente 6. Comme on le voit mieux sur les Figures 4 et 5, cette boucle extérieure 8 du joint d'une plaque polaire est destinée à être rabattue et accrochée élastiquement autour d'au moins une autre partie en saillie 9 de l'autre plaque, cet accrochage élastique permettant ainsi de maintenir les deux plaques appliquées l'une contre l'autre dans un sous-ensemble unitaire comme représenté sur la Figure 3.

Selon d'autres aspects de l'invention, chaque joint 3 comporte, sur un des petits côtés du rectangle, au moins un plot 10 venant se loger élastiquement légèrement en force dans un évidement correspondant aménagé à la périphérie de la plaque 1, ainsi qu'au moins une languette 11 faisant saillie extérieurement et associée à un bossage correspondant 12 de la plaque polaire 1 pour former, en configuration assemblée, mâchoire de pincement d'un conducteur ou d'une borne d'un composant électronique 13 associé à la cellule pour mesurer la tension de cette dernière.

Comme on le voit sur la Figure 3, chaque plaque polaire 1 présente, sur un de ses petits côtés, des chenaux biseautés s'ouvrant vers l'extérieur 14 pour le montage de structures de raccordement des canaux de fluides 2 à des circuits de fluides extérieurs tels que décrits dans la demande de brevet FR0451375, du 30 juin 2004, au nom de la demanderesse.

Selon un aspect de l'invention, comme représenté en coupe à plus grande échelle sur la Figure 6, où l'on reconnaît la membrane échangeuse de protons 15 pincée avec ses couches de diffusion de gaz 16 entre les plaques polaires 1, la gorge 5 de réception du joint 3 en matériau élastique faiblement fluable, présente une forme trapézoïdale, le joint 3 présentant une section rectangulaire permettant d'obtenir l'étanchéité avec des efforts d'écrasement plus faibles tout en maintenant un bon positionnement du joint dans la gorge. Pour faciliter encore le positionnement du joint dans la gorge, le joint 3 peut présenter, sur ses faces latérales, des nervures ou gaudrons verticaux 17 parallèles. De plus, pour garantir une bonne déformation élastique du joint 3 dans la gorge 5, celui-ci comporte, sur une de ses faces principales, une rainure longitudinale 18. Avantageusement, en configuration essemblée, comme représenté sur la Figure 6, la rainure 18 d'un des joints 3 est positionnée contre le fond de la gorge 5 correspondante, la rainure de l'autre joint étant positionnée contre la membrane 15.

Les plaques polaires 1 sont avantageusement réalisées, de façon classique, à base de carbone, typiquement par moulage de poudre à base de graphite. Les joints 3 sont, quant à eux, réalisés en matériaux élastomères, par exemple en Viton, Butyl, EPDM, Hytrel, silicone...

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

## Revendications

1. Joint d'étanchéité de plaque polaire (1) de cellule de pile à combustible, comprenant une partie principale en forme de cadre rectangulaire et, en au moins deux coins diagonalement opposés, une partie en saillie formant au moins une première boucle (6) pour accrochage sur le bord (7) d'une plaque.

2. Joint selon la revendication 1, **caractérisé en ce que** la partie en saillie d'au moins un coin du joint (3) comporte une deuxième boucle (8) pour accrochage sur le bord (9) d'une autre plaque.

3. Joint selon l'une des revendications 1 et 2, **caractérisé en ce que** la partie principale du joint (3) comporte au moins une protubérance (10) destinée à être reçue dans un évidement d'une plaque.

4. Joint selon l'une des revendications précédentes, **caractérisé en ce qu'**il est réalisé en un matériau élastomère.

5. Plaque de cellule de pile à combustible comportant, sur une face, un réseau de canaux (2) de circulation de fluide et, à sa périphérie, une gorge (5) de configuration générale rectangulaire destinée à recevoir un joint d'étanchéité (3) selon l'une des revendications 1 à 4, avec, à au moins deux coins diagonalement opposés, au moins un ergot (7 ;9) d'accrochage d'une boucle (6 ; 8) de joint (3).

6. Plaque selon la revendication 5, **caractérisée en ce que** la gorge (5) a un profil transversal trapézoïdal.

7. Plaque selon l'une des revendications 5 et 6, **caractérisée en ce qu'**elle est réalisée en graphite moulé.

8. Cellule de pile à combustible constituée d'une paire de plaques (1) accolées selon l'une des revendications 5 à 7 et pourvues chacune d'un joint d'étanchéité selon l'une des revendications 1 à 4.

9. Cellule selon la revendication 8, **caractérisée en ce qu'**elle est pré-assemblée par accrochage des boucles (6 ; 8) des joints selon la revendication 2.

10. Cellule selon l'une des revendications 8 à 9 comprenant au moins un composant électrique (13) ayant une borne pincée par une protubérance (11) du joint (3).

11. Pile à combustible comprenant un empilement de cellules selon l'une des revendications 8 à 10.

## Claims

1. Gasket for a pole plate (1) of a cell element of a fuel cell assembly, comprising a main part in the form of a rectangular frame and, in at least two diagonally opposed corners, a projecting part forming at least a first loop (6) for catching on the edge (7) of a plate.

2. Gasket according to Claim 1, **characterized in that** the projecting part of at least one corner of the gasket (3) includes a second loop (8) for catching on the edge (9) of another plate.

3. Gasket according to either of Claims 1 and 2, **characterized in that** the main part of the gasket (3) includes at least one protuberance (10) intended to be housed in a recess of a plate.

4. Gasket according to one of the preceding claims, **characterized in that** it is made of an elastomer.

5. Plate of a cell element of a fuel cell assembly, comprising, on one face, an array of fluid circulation channels (2) and, on its periphery, a slot (5) of rectangular general configuration, intended to house a gasket (3) according to one of Claims 1 to 4, with, in at least two diagonally opposed corners, at least one lug (7; 9) for catching a loop (6; 8) of the gasket (3).

6. Plate according to Claim 5, **characterized in that** the slot (5) has a trapezoidal cross section.

7. Plate according to either of Claims 5 and 6, **characterized in that** it is made of molded graphite.

8. Cell element of a fuel cell assembly, consisting of a pair of adjoined plates (1) according to one of Claims 5 to 7 and each provided with a gasket according to one of Claims 1 to 4.

9. Cell element according to Claim 8, **characterized in that** it is preassembled by adjoining the loops (6; 8) of the gaskets according to Claim 2.

10. Cell element according to either of Claims 8 and 9, which includes at least one electric component (13) having a terminal clamped by a protuberance (11) of the gasket (3).

11. Fuel cell assembly, comprising a stack of cell elements according to one of Claims 8 to 10.

## Patentansprüche

1. Dichtung für eine Polplatte (1) einer Brennstoffzelle, mit einem Hauptteil in Form eines rechteckigen Rahmens und aus mindestens zwei diagonal gegenüberliegenden Ecken, wobei ein vorragender Teil mindestens eine erste Schlaufe (6) zur Befestigung am Rand (7) einer Platte bildet.

2. Dichtung nach Anspruch 1, **dadurch gekennzeichnet, dass** der vorragende Teil mindestens einer Ecke der Dichtung (3) eine zweite Schlaufe (8) zur Befestigung am Rand (9) einer anderen Platte aufweist.

3. Dichtung nach einem der Ansprüche 1 und 2, **dadurch gekennzeichnet, dass** der Hauptteil der Dichtung (3) mindestens einen Vorsprung (10) aufweist, der in einer Aussparung einer Platte aufgenommen werden soll.

4. Dichtung nach einem der vorhergehenden Ansprüche, **dadurch gekennzeichnet, dass** sie aus einem elastomeren Material hergestellt ist.

5. Brennstoffzellenplatte, die auf einer Seite ein Netz von Fluidzirkulationskanälen (2) und an ihrem Umfang eine Nut (5) mit allgemein rechteckiger Konfiguration aufweist, die eine Dichtung (3) nach einem der Ansprüche 1 bis 4 aufnehmen soll, mit an mindestens zwei diagonal gegenüberliegenden Ecken mindestens einer Nase (7; 9) zur Befestigung einer Schlaufe (6; 8) der Dichtung (3).

6. Platte nach Anspruch 5, **dadurch gekennzeichnet, dass** die Nut (5) ein trapezförmiges Querprofil aufweist.

7. Platte nach einem der Ansprüche 5 und 6, **dadurch gekennzeichnet, dass** sie aus geformtem Graphit hergestellt ist.

8. Brennstoffzelle, die aus einem Paar aneinander gefügter Platten (1) nach einem der Ansprüche 5 bis 7 besteht, die jeweils mit einer Dichtung nach einem der Ansprüche 1 bis 4 versehen sind.

9. Zelle nach Anspruch 8, **dadurch gekennzeichnet, dass** sie durch Befestigung der Schlaufen (6; 8) der Dichtungen nach Anspruch 2 vormontiert ist.

10. Zelle nach einem der Ansprüche 8 bis 9, die mindestens ein elektrisches Bauteil (13) umfasst, das einen durch einen Vorsprung (11) der Dichtung (3) festgeklemmten Anschluss aufweist.

11. Brennstoffzelle, die einen Stapel von Zellen nach einem der Ansprüche 8 bis 10 umfasst.
